(19) Europäisches Patentamt
European Patent Office
Office européen des brevets

(11) **EP 4 418 197 A1**

(12) **EUROPEAN PATENT APPLICATION**

(43) Date of publication:
**21.08.2024  Bulletin 2024/34**

(21) Application number: **24158415.0**

(22) Date of filing: **19.02.2024**

(51) International Patent Classification (IPC):
**G06T 1/20** $^{(2006.01)}$     **G06T 1/60** $^{(2006.01)}$

(52) Cooperative Patent Classification (CPC):
**G06T 1/20; G06T 1/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.02.2023  KR 20230022446**

(71) Applicant: **Samsung Electronics Co., Ltd.**
**Suwon-si, Gyeonggi-do 16677 (KR)**

(72) Inventors:
• **KIM, Youngjin**
  **16677 Suwon-si (KR)**
• **CHOI, Sunghoo**
  **16677 Suwon-si (KR)**

(74) Representative: **Marks & Clerk LLP**
**15 Fetter Lane**
**London EC4A 1BW (GB)**

(54) **IMAGE PROCESSOR, IMAGE PROCESSING DEVICE INCLUDING THE SAME AND IMAGE PROCESSING METHOD**

(57)     An image processor, including a first conversion unit sequentially scanning input pixel data, storing the pixel data for each line, and outputting an M*N kernel matrix through the stored pixel data, M and N being integers greater than or equal to 2, an image processing circuit image-processing pixel data corresponding to the M*N kernel matrix on a processing unit basis, and a second conversion unit reordering a result of the image-processing by the image processing circuit to correspond to a format of pixel data input to the first conversion unit and outputting the reordered result.

**FIG. 1**

**Description**

BACKGROUND

1. Field

An image processor, an image processing apparatus including the same, and an image processing method is disclosed.

2. Description of the Related Art

An image sensor is a semiconductor device that converts optical information into electrical signals. Such an image sensor may include a charge coupled device (CCD) image sensor and a complementary metal-oxide semiconductor (CMOS) image sensor.

SUMMARY

Embodiments are directed to an image processor, including a first conversion unit sequentially scanning input pixel data, storing the pixel data for each line, and outputting an M*N kernel matrix through the stored pixel data, M and N being integers greater than or equal to 2, an image processing circuit image-processing pixel data corresponding to the M*N kernel matrix on a processing unit basis, and a second conversion unit reordering a result of the image-processing by the image processing circuit to correspond to a format of pixel data input to the first conversion unit and outputting the reordered result.

Embodiments are directed to an image processing device, including an image sensor including a plurality of pixels and a color filter array on the plurality of pixels, and an image processor processing data output from the image sensor, wherein the image processor includes a first conversion unit sequentially scanning input pixel data, storing the pixel data for each line, and outputting an M*N kernel matrix through the stored pixel data M and N being integers greater than or equal to 2, an image processing circuit image-processing pixel data corresponding to the M*N kernel matrix on a processing unit basis, and a second conversion unit reordering a result of the image-processing of the image processing circuit to correspond to a format of pixel data input to the first conversion unit and outputting the reordered result.

Embodiments are directed to an image processing method, including sequentially receiving, per cycle, CH pieces of pixel data output from an image sensor, and storing the pixel data in first to Mth line memories for each line, outputting the pixel data stored in the first line memory to the Mth line memory, in the form of an M*N kernel matrix, setting a processing unit, and image-processing pixel data corresponding to the M*N kernel matrix using the processing unit, and reordering the image-processed data, wherein CH satisfies $2^n$, n is an integer of 1 or greater, and M and N are integers of 2 or greater.

At least some of the above and other features of the invention are set out in the claims.

BRIEF DESCRIPTION OF THE DRAWINGS

Features will become apparent to those of skill in the art by describing in detail embodiments with reference to the attached drawings, in which:

FIG. 1 is a block diagram showing an image processing device according to an example embodiment;
FIG. 2 is a block diagram showing a sensing core of an image sensor according to an example embodiment;
FIGS. 3A to 3C are diagrams showing a color filter array according to an example embodiment;
FIG. 4 is a block diagram showing an image processing processor according to an example embodiment;
FIG. 5 is a block diagram showing an image processing method using the image processing processor of FIG. 4;
FIG. 6 is a diagram showing a sequence of storing images into a memory according to an example embodiment;
FIG. 7 is a diagram showing a memory storage method according to an example embodiment;
FIGS. 8A and 8B are views showing an image processing method according to an example embodiment;
FIGS. 9A and 9B are diagrams showing an image processing method according to an example embodiment;
FIG. 10 is a diagram showing data processing in an image processing processor according to an example embodiment;
FIG. 11 is a diagram showing timing in an image processing processor according to an example embodiment;
FIG. 12 is a flowchart showing an image processing method according to an example embodiment;
FIG. 13 is a block diagram showing an electronic device including a multi-camera module; and
FIG. 14 is a detailed block diagram of the camera module shown in FIG. 13.

DETAILED DESCRIPTION

Hereinafter, various embodiments will be described with reference to the accompanying drawings.

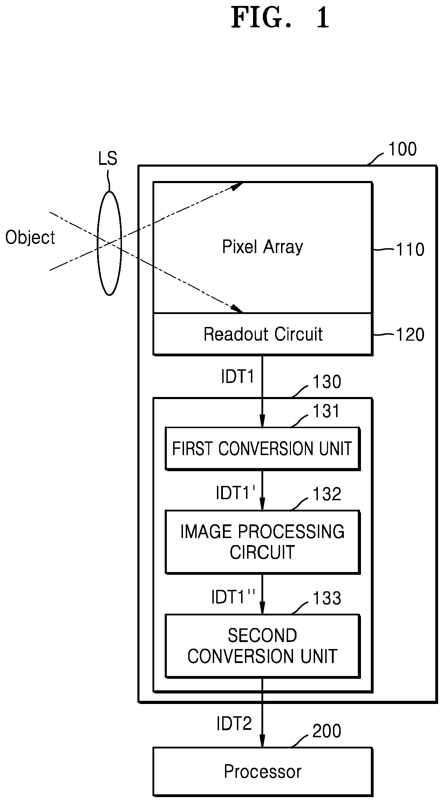

FIG. 1 is a block diagram showing an image processing device according to an example embodiment. An image processing device may include an image sensor 100. The image sensor 100 may convert an optical signal of an object incident through the optical lens LS into image data. The image sensor 100 may be mounted on an electronic device having an image or light sensing function. In an implementation, the image sensor 100 may be mounted on the electronic device, such as digital still cameras, digital video cameras, smartphones, wearable devices, Internet of Things (IoT) devices, tablet Personal Computers (PCs), Personal Digital Assistants (PDAs), Portable Multimedia Players (PMPs), navigation devices or other portable devices where an image sensor 100 may be desirable. In addition, the image sensor 100 may be mounted on an electronic device provided as a component for vehicles (whether manned or unmanned), furniture, manufacturing facilities, doors or entryways, or various other monitoring or measuring devices where an image sensor 100 may be desirable. As used herein, the term "or" is not an exclusive term, e.g., "A or B" would include A, B, or A and B.

Referring to FIG. 1, the image sensor 100 may include a pixel array 110, a readout circuit 120, and an image processing processor 130. In one embodiment, the pixel array 110, the readout circuit 120, and the image processing processor 130 may be implemented as a single semiconductor chip or semiconductor module. In an embodiment, the pixel array 110 and the readout circuit 120 may be implemented as one semiconductor chip, and the image processing processor 130 may be implemented as another semiconductor chip. The image processing processor 130 may be a separate component from the image sensor 100.

The pixel array 110, e.g., may be implemented with a photoelectric conversion element such as a Charge Coupled Device (CCD) or a Complementary Metal Oxide Semiconductor (CMOS), and may be implemented with various types of photoelectric conversion elements. The pixel array 110 may include a plurality of pixels that may convert a received optical signal (light) into an electrical signal, and the plurality of pixels may be arranged in a matrix. Each of the plurality of pixels includes a light sensing element. In an implementation, the light sensing element may include a photo diode, a photo transistor, a port gate, or a pinned photodiode.

The readout circuit 120 may convert electrical signals received from the pixel array 110 into image data. The readout circuit 120 may amplify electrical signals and analog-digitize the amplified electrical signals. Image data generated by the readout circuit 120 may include pixel data corresponding to each pixel of the pixel array 110. The readout circuit 120 may constitute a sensing core together with the pixel array 110.

The image processing processor 130 may perform image processing on image data output from the readout circuit 120. In an implementation, the image processing processor 130 may perform image processing, e.g., bad pixel correction, remosaic, and noise removal, on the image data output from the readout circuit 120.

The image processing processor 130 may output image data on which image processing has been performed. Image data on which image processing has been performed may be provided to the external processor 200 (e.g., a main processor or a graphic processor of an electronic device in which the image sensor 100 is mounted). Hereinafter, for convenience and clarity of explanation, image data generated and output from the readout circuit 120 will be referred to as first image data IDT1, and image data output from the image processing processor 130 will be referred to as second image data IDT2.

The image processing processor 130 may include a first conversion unit 131, an image processing circuit 132, and a second conversion unit 133.

The first conversion unit 131 may receive the first image data IDT1 output from the readout circuit 120 in units of CH pieces. The first conversion unit 131 may group pixel data in units of CH pieces into one bundle and simultaneously scan pixel data included in one bundle. The first conversion unit 131 may sequentially scan a plurality of pixel data included in the first image data IDT1 in units of CH pieces. The first conversion unit 131 may receive the first image data IDT1 and output kernel image data IDT1' to which a kernel matrix may be applied. CH may satisfy $2^n$. n may be an integer of 1 or more.

The image processing circuit 132 may perform image processing using kernel image data IDT1' to which a kernel is applied. The image processing circuit 132 may perform image processing by applying a processing unit to the input kernel image data IDT1'. According to an example embodiment, the image processing circuit 132 may perform bad pixel correction. The image processing circuit 132 may output pixel data IDT1" for which image processing has been performed by applying a processing unit.

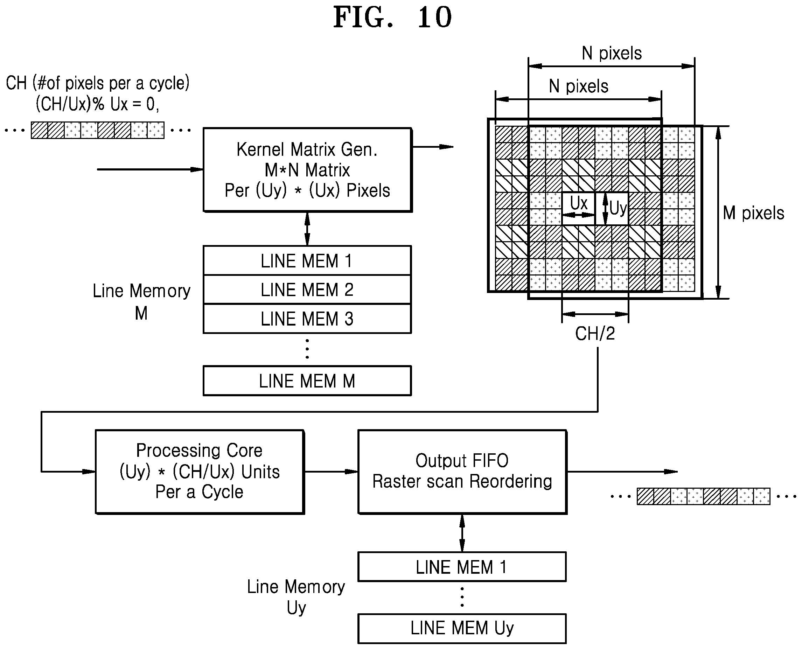

A processing unit processed by an image processing processor may be determined according to the number of sub-pixels included in a shared pixel. In an implementation, the processing unit may be determined by a unit of pixels included in each color unit of the color filter array. The processing is further described below with reference to FIG. 10.

The second conversion unit 133 may reorder pixel data IDT1" for which image processing has been performed by applying the processing unit. A format of the second image data IDT2 output through this may be the same as that of the first image data IDT1.

The first image data IDT1 may be processed by the image processing processor 130 including the first conversion unit 131, the image processing circuit 132, and the second conversion unit 133. In embodiments, the first conversion unit 131, the image processing circuit 132, and the second conversion unit 133 may be implemented in hardware. In other embodiments, the first conversion unit 131, the image processing circuit 132, and the second conversion unit 133 may be implemented in software or a combination of hardware and software.

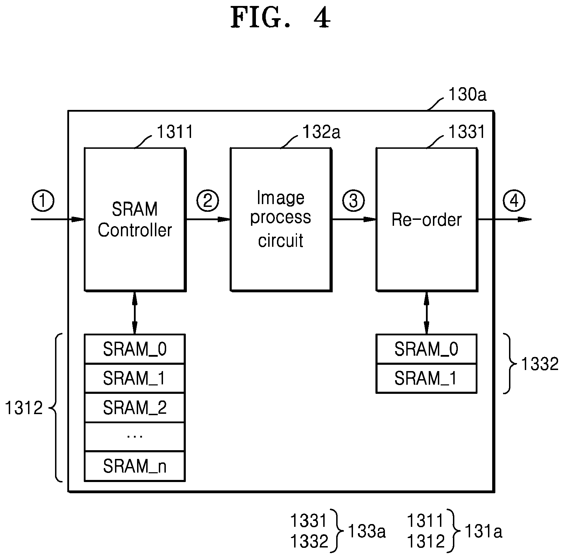

When processing the first image data IDT1, the image processing processor 130 may evenly distribute power for each line to reduce power fluctuation. A more detailed description of the first conversion unit 131, the image processing circuit 132, and the second conversion unit 133 will be provided below with reference to FIG. 4.

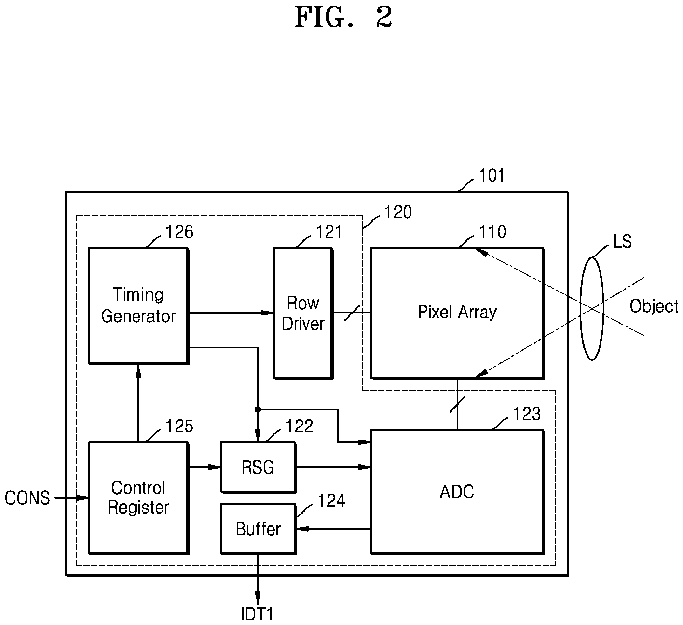

FIG. 2 is a block diagram showing a sensing core of an image sensor according to an example embodiment. Referring to FIG. 2, the sensing core 101 may include a pixel array 110 and a readout circuit 120. The readout circuit 120 includes a row driver 121, a ramp signal generator 122 (hereafter "RSG"), an analog-to-digital converter 123 (hereafter 'ADC'), a buffer 124, a control register 125, and a timing generator 126.

The pixel array 110 may be electrically connected to the row driver 121 and the ADC 123 through signal lines.

The row driver 121 may drive the pixel array 110 row by row under the control of the timing generator 126. The row driver 121 may decode row control signals (e.g., address signals) generated by timing generator 126, and may select at least one of the row lines constituting the pixel array 110 in response to the decoded row control signal. The pixel array 110 outputs a pixel signal from a row selected by a row select signal provided from the row driver 121 to the ADC 123.

The ADC 123 may compare the pixel signal to the ramp signal provided from the RSG 122 to generate a result signal, count the result signal, and convert the result signal into a digital signal. The ADC 123 may output the converted signal to the buffer 124 as raw image data. The ADC 123 may include an amplifier to amplify the pixel signal, a comparator, and a counter.

The control register 125 stores various set values (e.g., register values) for components of the readout circuit 120, such as the row driver 121, the RSG 122, the ADC 123, the buffer 124, and the timing generator 126 and controls the operation of the components based on set values. The setting values may include a control signal CONS including the setting values from an external processor, e.g., processor 200 shown in FIG. 1.

The timing generator 126 may control operation timings of the row driver 121, the ADC 123, and the RSG 122 in accordance with control by the control register 125 based on control signal CONS.

The buffer 124 may temporarily store the raw image data output from the ADC 123 and output the raw image data as the first image data IDT1 to the image processing processor 130 shown in FIG. 1.

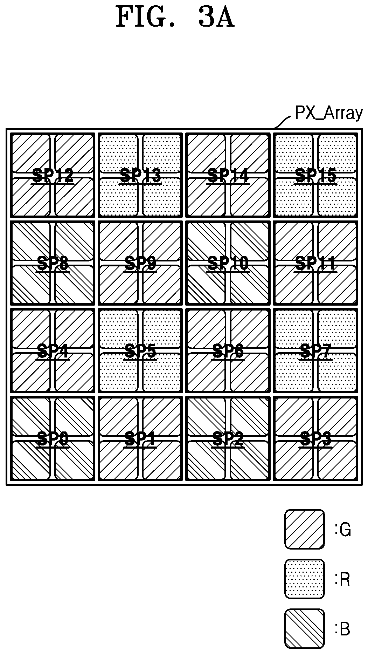

FIGS. 3A to 3C are diagrams showing a color filter array according to an example embodiment. The pixel array PX_Array shown in FIGS. 3A to 3C may correspond to the pixel array 110 shown in FIG. 2.

Referring to FIG. 3A, the pixel array PX Array includes a plurality of pixels arranged according to a plurality of rows and columns, and e.g., a shared pixel defined as a unit including pixels arranged in 2 rows and 2 columns may include 4 sub-pixels. In other words, the shared pixel may include four photo diodes respectively corresponding to the four sub-pixels. The pixel array PX Array may include first to sixteenth shared pixels SP0 to SP15. The pixel array PX Array may include a color filter so that the shared pixels SP0 to SP15 may sense various colors. In embodiments, the color filters include filters that sense red R, green G, and blue B, and one shared pixel SP0 to SP15 may include sub-pixels on which the same color filter is disposed. In an implementation, the first shared pixel SP0, the third shared pixel SP2, the ninth shared pixel SP8, and the eleventh shared pixel SP10 may include sub-pixels having a blue B color filter, the second shared pixel SP1, the fourth shared pixel SP3, the fifth shared pixel SP4, the seventh shared pixel SP6, the tenth shared pixel SP9, the twelfth shared pixel SP11, the thirteenth shared pixel SP12, and the fifteenth shared pixel SP14 may include sub-pixels having a green G color filter, and the sixth shared pixel SP5, the eighth shared pixel SP7, the fourteenth shared pixel SP13, and the sixteenth shared pixel SP15 may include sub-pixels having a red R color filter. In addition, each of a group including the first shared pixel SP0, the second shared pixel SP1, the fifth shared pixel SP4, and the sixth shared pixel SP5, a group including the third shared pixel SP2, the fourth shared pixel SP3, the seventh shared pixel SP6, and the eighth shared pixel SP7, a group including the ninth shared pixel SP8, the tenth shared pixel SP9, the thirteenth shared pixel SP12, and the fourteenth shared pixel SP13, a group including the eleventh shared pixel SP10, the twelfth shared pixel SP11, the fifteenth shared pixel SP14, and the sixteenth shared pixel SP15 may be arranged in the pixel array PX Array to correspond to a Bayer pattern. According to an embodiment, a group including the first shared pixel SP0, the second shared pixel SP1, the fifth shared pixel SP4, and the sixth shared pixel SP5, a group including the third shared pixel SP2, the fourth shared pixel SP3, the seventh shared pixel SP6, and the eighth shared pixel SP7, a group including the ninth shared pixel SP8, the tenth shared pixel SP9, the thirteenth shared pixel SP12, and the fourteenth shared pixel SP13, a group including the eleventh shared pixel SP10, the twelfth shared pixel SP11, the fifteenth shared pixel SP14, and the sixteenth shared pixel SP15 may correspond to a CFA block. In some embodiments, the shared pixels SP0, SP1, SP4, and SP5 may be referred to as tetra cells.

However, this is only an example embodiment, and the pixel array PX_Array according to other embodiments may include various types of color filters. In implementations, the color filter may include filters for sensing yellow, cyan, magenta, and green colors. Alternatively, the color filter may include filters that sense red, green, blue, and white colors. In addition, the pixel array PX Array may include more shared pixels, and the arrangement of each shared pixel SP0 to SP15 may be implemented in various ways.

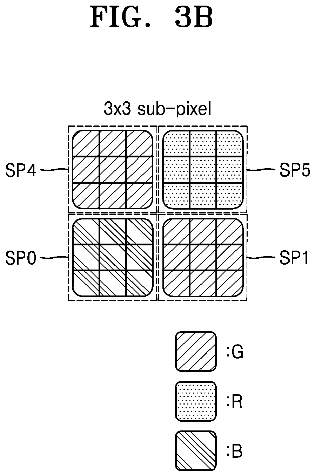

Referring to FIG. 3B, in an implementation, the shared pixels SP0, SP1, SP4, and SP5 may each include nine sub-pixels. The first shared pixel SP0 may include nine sub-pixels including a blue B color filter, and the second shared pixel SP1 and the fifth shared pixel SP4 may each include nine sub-pixels including a green G color filter. The sixth shared pixel SP5 may include nine sub-pixels including a red R color filter. In some embodiments, the shared pixels SP0, SP1, SP4, and SP5 may be referred to as nona cells.

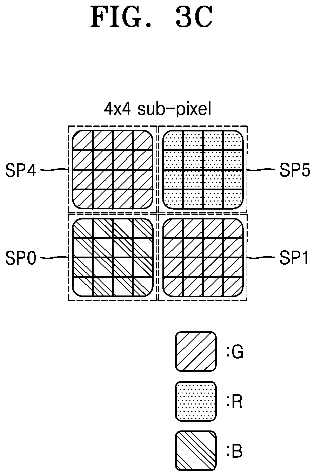

Referring to FIG. 3C, the shared pixels SP0, SP1, SP4, and SP5 may each include 16 sub-pixels. The first shared pixel SP0 may include sixteen sub-pixels including a blue B color filter, and the second shared pixel SP1 and the fifth shared pixel SP4 may each include sixteen sub-pixels including a green G color filter. The sixth shared pixel SP5 may include sixteen sub-pixels including a red R color filter. In some embodiments, the shared pixels SP0, SP1, SP4, and SP5 may be referred to as hexadeca cells.

As described above, a processing unit processed by an image processing processor may be determined according to the number of sub-pixels included in a shared pixel. As stated above in reference to an example embodiment, the processing unit may be determined by a unit of pixels included in each color unit of the color filter array. The processing unit will be further described below with reference to FIG. 10.

FIG. 4 is a block diagram showing an image processing processor according to an example embodiment, e.g., the image processing processor 130 shown in FIG. 1.

Referring to FIG. 4, the image processing processor 130a may include a first conversion unit 131a, an image processing circuit 132a, and a second conversion unit 133a. The first conversion unit 131a may include an SRAM controller 1311 and a first line memory 1312. The SRAM controller 1311 included in the first conversion unit 131a may scan sequentially input pixel data and store the scanned pixel data in the first line memory 1312.

According to an example embodiment, the number of line memories included in the first line memory 1312 included in the first conversion unit 131a may be n. The first line memory 1312 including line memories SRAM_0, SRAM_1, ... , SRAM_n, may include a total of n line memories. This may be the same as the number of lines included in the first image data IDT1. Alternatively, the number of line memories included in the first line memory 1312 may be a number corresponding to M, which is the number of rows in the M*N kernel matrix to be generated by the first conversion unit 131a. According to an embodiment, the M*N kernel matrix may be a kernel matrix including M rows and N columns. A matrix expressed in the form of A*B or AxB may mean a matrix including A rows and B columns. The image processing processor 130a may include a line memory 1312 for through-put conversion. According to an embodiment, the image processing processor 130a may be an image processing processor to which an algorithm that operates once every two or more lines is applied.

The first conversion unit 131a may generate a kernel matrix based on pixel data stored in the first line memory 1312. The first conversion unit 131a may generate pixel data stored in the first line memory 1312 as an M*N kernel matrix. N and M may be integers greater than or equal to 2. According to an implementation, after separately storing the pixel data input to the first conversion unit 131a in the first line memory 1312, data through-put may be adjusted by outputting the pixel data as an M*N kernel matrix at once. In one example, the first conversion unit 131a may be configured to sequentially scan input pixel data, store the pixel data for each line, and output an M*N kernel matrix through the stored pixel data, where M and N are integers greater than or equal to 2. In one example, the first conversion unit 131a may include M line memories corresponding to a number of rows of the kernel matrix. In one example, the first conversion unit may be configured to simultaneously receive CH pieces of pixel data per cycle, where CH satisfies $2^n$, and n is an integer greater than or equal to 1. In one example, the first conversion unit may be configured to simultaneously receive the input pixel data in the form of 1*CH, where CH satisfies $2^n$, and n is an integer greater than or equal to 1.

Data generated by the kernel matrix may be input to the image processing circuit 132a. The image processing circuit 132a may image-process pixel data based on the input kernel matrix. According to an implementation, the image processing circuit 132a may check whether a bad pixel is included in the pixel data included in the kernel matrix, and may perform a correction process if the bad pixel is included. The image processing circuit 132a may process pixel data generated as a kernel matrix based on the processing unit. The image processing circuit 132a may process pixel data generated as a kernel matrix and output the processed pixel data as a processing unit. In one example, the image processing circuit 132a may be configured to image-process pixel data corresponding to the M*N kernel matrix on a processing unit basis.

The second conversion unit 133a may include a reordering processor 1331 and a second line memory 1332. The second conversion unit 133a may reorder a data format of the pixel data processed by the processing unit, which is the output of the image processing circuit 132a, to output the pixel data in raster scan order. Pixel data processed by the processing unit may be stored in the second line memory 1332 line by line. According to an implementation, the number of line memories included in the first line memory 1312 included in the first conversion unit 131a may be different from the number of line memories included in the second line memory 1332 included in the second conversion unit 133a. In FIG. 4, the second line memory 1332 is illustrated as including two line memories SRAM_0 and SRAM_1. In one example, the second conversion unit 133a may be configured to simultaneously output the CH pieces of pixel data per cycle.

The second conversion unit 133a may transform the pixel data stored in the second line memory 1332 to conform to the format of the first image data input to the first conversion unit 131a and output the transformed pixel data. Through this, the format of the first image data input to the first conversion unit 131a and the second image data output from the second conversion unit 133a may be the same. In one example, the second conversion unit 133a may be configured to reorder a result of the image-processing carried out by the image processing circuit 132a to correspond to a format of pixel data input to the first conversion unit, and to output the reordered result. In one example, the second conversion unit may include a number of line memories corresponding to a row direction of the processing unit.

In image sensors using color filter arrays (CFA), such as tetra cells (2x2), RGBW (2x2), and nona cells (3x3), the image processing processor 130a may be applied to hardware Intellectual Property (IP) using representative values (direction information) in units of M*N.

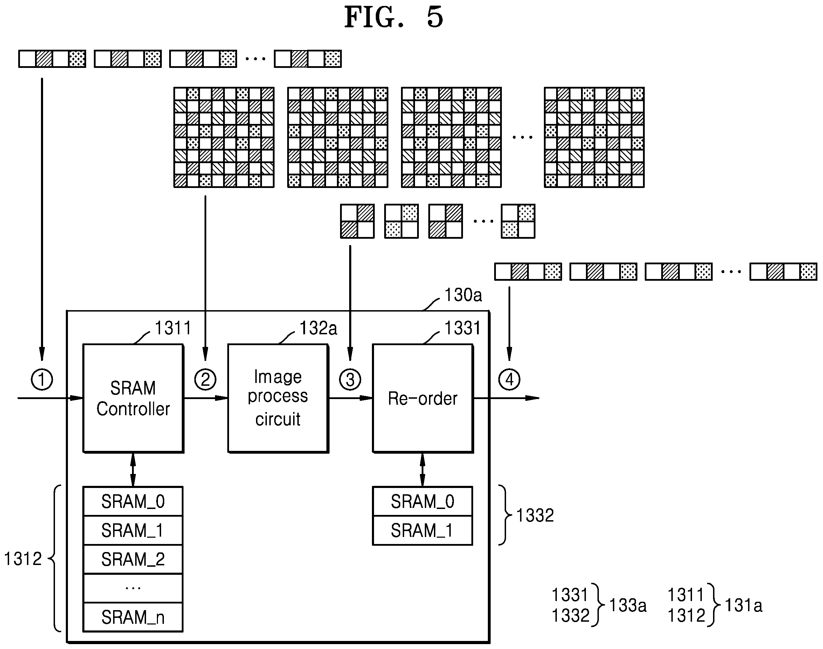

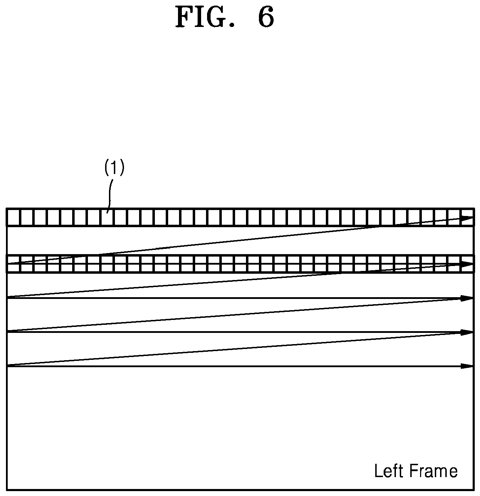

FIG. 5 is a block diagram showing an image processing method using the image processing processor shown in FIG. 4. In the description of FIG. 5, descriptions overlapping with those described in FIG. 4 are omitted. When explaining the operation of the first conversion unit 131a, the image processing circuit 132a, and the second conversion unit 133a of FIG. 5, for convenience of explanation, it will be described also with reference to FIGS. 6 to 9B.

The pixel data shown in FIG. 5 represents pixel data input or output per cycle.

Referring to FIG. 5, an embodiment in which four pixel data are sequentially applied is shown. In this case, Pixel Per Cycle (PPC) may be 4. PPC may mean the number of incoming pixels per cycle. As described above, since 4 pieces of pixel data are applied as one bundle, CH may be 4. CH and PPC may be used with the same meaning.

According to an implementation, the first conversion unit 131a may simultaneously receive 4 pixel data as one unit. The first conversion unit 131a may sequentially receive four pixel data and store the four pixel data in the first line memory 1312 line by line.

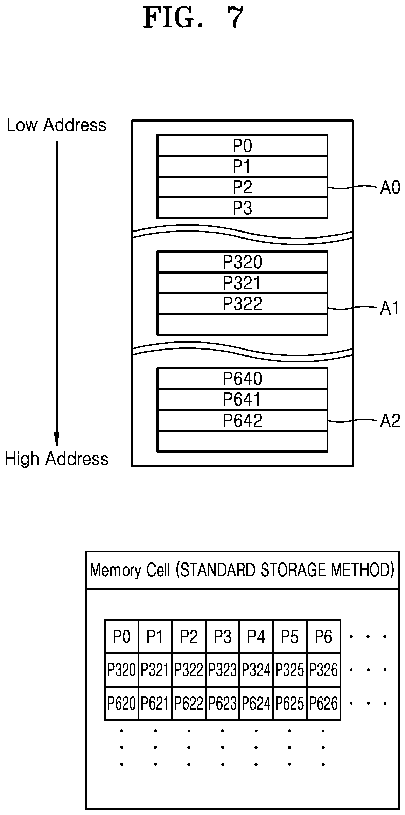

FIG. 6 is a diagram showing a sequence of storing images into a memory according to an example embodiment. FIG. 7 is a diagram showing a memory storage method according to an example embodiment.

As may be seen with reference to FIG. 6, an image is composed of pixels, and in order to store the image in the memory, the process of reading the image by the sensor is performed in a horizontal order (1). In an implementation, reading is performed in units of lines. In an implementation, to store the left image of the two images into memory, in the process of reading the image by the image sensor, after reading the pixels constituting the first line in the horizontal direction in the image frame, the pixels constituting the second line in the horizontal direction are read in order. Referring to FIG. 6, when pixel data is input for bad pixel correction, the pixel data is input in raster scan order, and output of pixel data must be output in the same raster scan order.

Referring to FIG. 7, to store an image read by an image sensor in a memory, an address must be assigned, and at this time, an address may be assigned to each line in the horizontal direction. In an implementation, addresses are given one by one in units of lines. In an implementation, the lowest address, e.g., address No. A0, may be assigned to the first line of the image, and the next lowest address, e.g., address No. A1, may be assigned to the second line. According to the addresses given in this order, the pixels of each line of the image are stored horizontally in the memory. In an implementation, as shown in FIG. 7, after the first line having address A0 is stored, the second line having address A1 is stored. In this manner, the pixels in each line are stored horizontally as well, and e.g., in the first line with address A0, the first pixel P0, the second pixel P1, and the third pixel P2 are stored in the horizontal direction.

In accordance with this example implementation, the pixel data input to the first conversion unit 131a of FIG. 5 may be sequentially scanned as in the embodiment of FIG. 6 and may be stored in the first line memory 1312 for each line as in embodiment of FIG. 7. In these embodiments, it is assumed that image data having a total of 8 lines and including 8 pixel data in one line is received. In this case, four pixel data are input as one unit, and pixel data of two units may be input in one line. When all pixel data of the first line is received, this may be stored in the line memory corresponding to the first line. Thereafter, four pixel data included in the second line are sequentially received and stored in a line memory corresponding to the second line.

Continuing, the first conversion unit 131a may generate a kernel matrix using pixel data stored in the first line memory 1312. Referring to FIG. 5, an 8x8 kernel matrix may be output per cycle. It should be noted that the size of the kernel matrix output by the first conversion unit 131a may vary depending on the characteristics of an image signal processor (ISP).

Referring to FIG. 5, the first conversion unit 131a may receive pixel data in a raster scan order and store the pixel data of each line in the first line memory 1312. When generating an 8x8 kernel matrix, if pixel values of 8 lines are collected in the first line memory 1312, a kernel matrix including 8x8 pixel data may be transferred to the image processing circuit 132a at once (e.g. simultaneously). To match the data throughput, while one line is input to the first conversion unit 131a, only half of the line may be output from the first conversion unit 131a. In one example, the image processing circuit 132a may perform image processing by an area corresponding to half of the line per 1h-time.

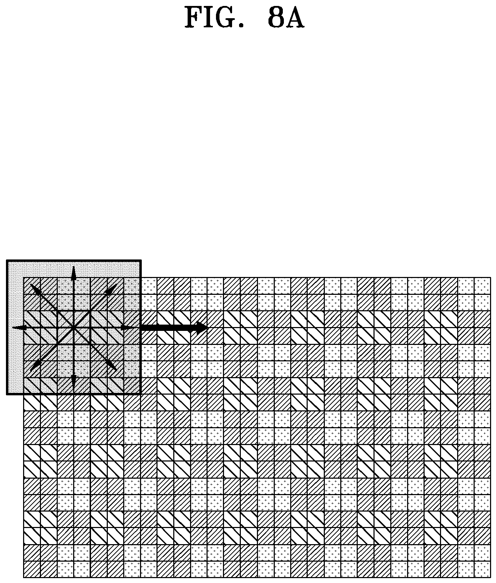

Reference will now be made to FIGS. 8A to 9B in providing a description of an embodiment of a processing procedure in the image processing circuit 132a.

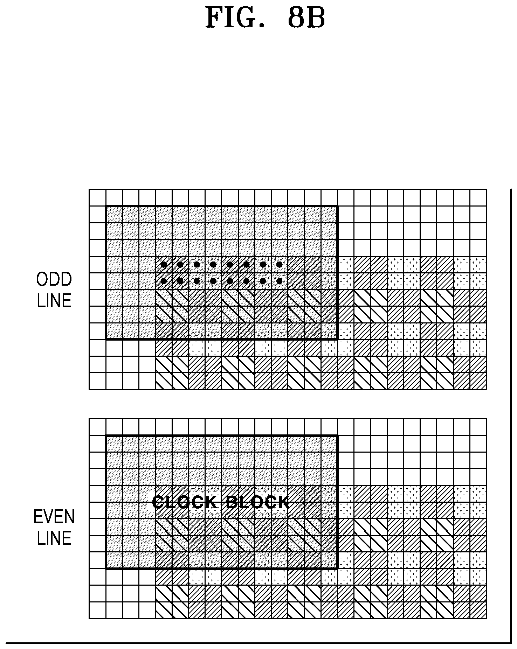

FIGS. 8A and 8B are views showing an image processing method according to an example embodiment. Referring to FIG. 8A, an embodiment of performing image processing while detecting directionality of input image data in units of 2x2, which is a tetra cell, is shown. In this case, processing may be performed based on the center point of a 2x2 unit pixel.

Referring to FIG. 8B, if image processing is performed with 2x2 unit pixels based on a center point, redundant operations may be performed on odd-numbered lines and even-numbered lines. In an image processing method according to a comparative example, by performing the operation of both the odd line and the even line when performing the operation of the odd line, and not performing the operation during the operation of the even line, power fluctuations between odd and even lines occur, although power is saved.

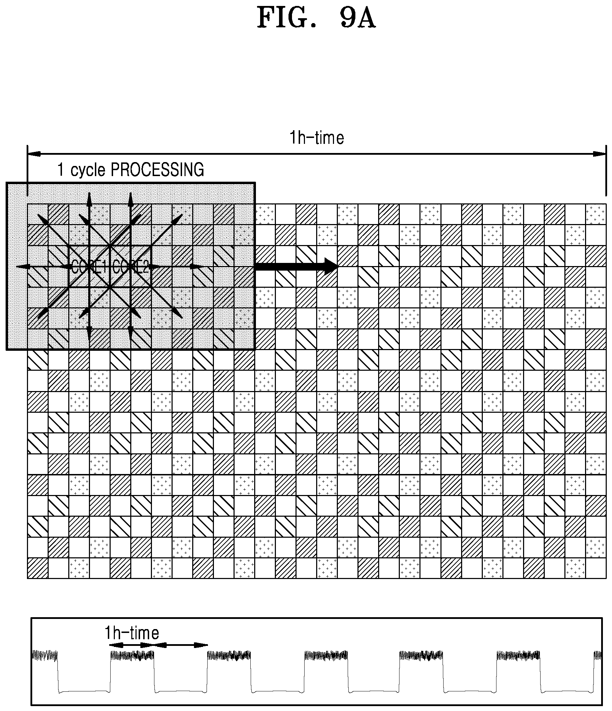

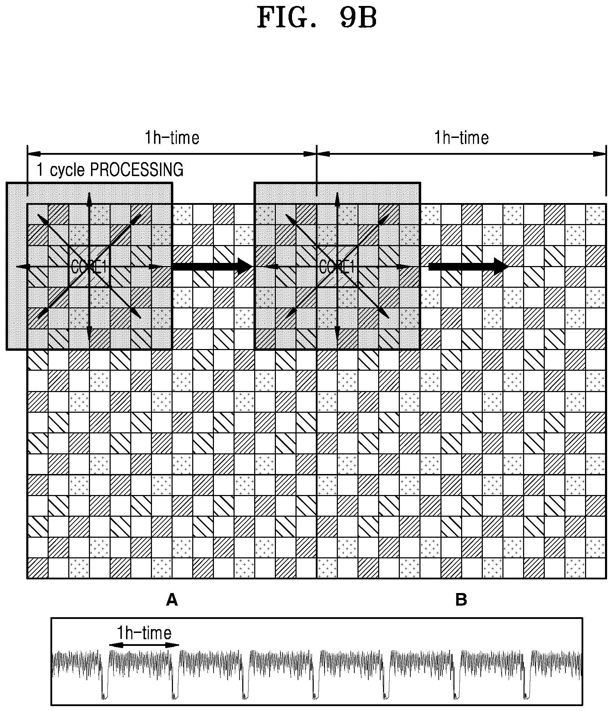

FIGS. 9A and 9B are diagrams showing an image processing method according to an example embodiment. Referring to FIG. 9A, an embodiment in which image processing is performed for 1h-time using the core logic in the embodiment shown in FIG. 8B is illustrated. According to an embodiment, an algorithm for correcting bad pixels in a tetra cell or RGBW may correct bad pixels if bad pixels are found for 4 pixels by processing in 2x2 units. Bad pixel correction is performed on a current line and the next line at once on even lines, and the current line is output as output, and the next line is written to a separate line memory and then read and output when outputting the next line. Therefore, odd-numbered lines do not need to be processed by the core, and only need to read the data written in the line memory. However, this operation makes the processing power level significantly different between even/odd lines, and power fluctuations per line affect analog circuits, leading to image quality deterioration (e.g., band noise). The power profile at this time is shown in the lower part of FIG. 9A. Referring to the power profile of FIG. 9A, it may be confirmed that power imbalance appears severe.

In an implementation, according to the embodiment of FIG. 9A, both even and odd lines are processed in the core logic core1 and core2 during 1h-time, and it may be confirmed that power imbalance occurs. Core logic may be included in the image processing processor.

FIG. 9B shows a processing method to solve such an imbalance of processing power between lines, wherein power of even-numbered lines may be spread to odd-numbered lines.

Referring to FIG. 9A, the image processing processor according to the comparative example processes one line in 1h-time, and referring to FIG. 9B, the image processing processor may be configured to process only 1/2 line in 1h-time. 1h-time may refer to one line time. Referring to FIG. 9A, two lines of area A, which is the left area, are processed in 1h-time, and then two lines of area B, which is the right area, are processed in 1h-time. Therefore, the image processing processor may eliminate power fluctuations occurring every other line, and may cut the logic gate count by half as the data through-put of the ISP core logic is also cut in half. Image processing may be performed by setting a processing unit to process only 1/2 lines in 1h-time. This is detailed in FIG. 10.

Referring back to FIG. 5, since the image processing circuit 132a processes only 1/2 line in 1h-time, if processing an 8x8 kernel matrix, compared to the method in which the ISP uses two cores, the image processing circuit 132a occupies 1/2 the logic size, thereby reducing the logic gate count.

The image processing circuit 132a may output 2x2 pixel data as a result of image processing. This may be pixel data of a size corresponding to the processing unit. The image processing circuit 132a may transfer 2x2 pixel data to the second conversion unit 133a after the ISP processes a central 2x2 pixel using an 8x8 kernel.

The second conversion unit 133a may reorder 2x2 pixel data to 1x4 and output the same. In an implementation, the output data of the second conversion unit 133a is in raster scan order, and 4 pixel data per cycle may be simultaneously output. Accordingly, it may be confirmed that the format of the pixel data input to the first conversion unit 131a and the format of the pixel data output from the second conversion unit 133a are the same.

By converting throughput of input pixel data, processing that exists only in a certain line may be spread to all lines and controlled to operate for each line. In this manner, power fluctuation may be reduced, and thus horizontal noise of an image sensor may be reduced. An image processing processor may be applied to a hardware structure for spreading power.

FIG. 10 is a diagram showing data processing in an image processing processor according to an example embodiment.

A processing pixel unit may refer to a unit of pixel data having the same color. A processing pixel unit may refer to a unit of pixels included in each color unit of the color filter array shown in FIGS. 3A to 3C. In one example, the color filter array may include pixels provided in units of Uy*Ux in each color unit, where Ux is an integer greater than or equal to 1 and Uy is an integer greater than or equal to 2. As illustrated in the example of FIG. 10, Ux may represent units in a horizontal or x-axis direction, and Uy may represent units in a vertical or y-axis direction. In the processing of image data, the processing pixel unit may be defined by the following equation.

$$\text{Processing Pixel Unit} = Uy * Ux, \; Uy > 1$$

If the value of Uy is 1, since it is an algorithm that operates every line, power spreading is not applied. According to an embodiment, if the pattern is a tetra cell, Ux=2 and Uy=2. According to an embodiment, if the pattern is a nonacell, Ux=3 and Uy=3. According to an embodiment, if the pattern is an RGBW cell, Ux=2 and Uy=2. In these embodiments, Ux may be an integer greater than or equal to 1.

If the processing pixel unit of the algorithm is defined, the kernel matrix size required for processing may be defined. It may be defined as M*N. N and M may be integers greater than or equal to 2.

The number of input pixels per cycle in the image processing device may be CH. CH may refer to the number of pixels processed per cycle in digital IP. However, CH may satisfy the following conditions.

$$(CH/2)\% \, Ux = 0$$

The above equation is intended to facilitate pixel transformation when forming and reordering pixel data.

Referring to FIG. 10, an embodiment in which CH is 8 is shown. The kernel matrix generating unit (or Kernel Matrix Gen.) shown in FIG. 10 may be a component corresponding to the SRAM controller 1311 shown in FIG. 4. The line memories LINE MEM 1 to LINE MEM M shown in FIG. 10 may have a configuration corresponding to the first line memory 1312 shown in FIG. 4. Line memories may be provided in M corresponding to the number of lines in the row direction of M*N, which is a kernel matrix to be generated.

To apply power spreading, a kernel matrix for image processing must be generated and output during a L/Uy cycle, and thus M line memories may be additionally used. L may refer to the number of cycles in one line.

Referring to FIG. 10, an example embodiment of an M*N kernel matrix and (Uy)x(CH/Ux), which is a processing unit included in the center of the kernel matrix, is shown. Said another way, the processing unit may be Uy * (CH/Ux). FIG. 10 is an embodiment in the case of Ux=2, Uy=2, and CH=8, and it is shown that image processing is performed in units of pixels of (2)x(4).

The processing core of FIG. 10 may correspond to the image processing circuit 132a shown in FIG. 4. The processing core may process in units of (Uy) x (CH / Ux) every cycle.

According to an example embodiment, a processing result of a processing core may be output in a format of Uy x (CH/Ux). In an implementation, the number of line memories for storing such a result may be Uy, which is the number corresponding to the row direction of the processing unit. Output FIFO Raster Scan Reordering shown in FIG. 10 may correspond to the second conversion unit 133a of FIG. 4. FIFO refers to First In, First Out. A line memory connected to the Output FIFO may correspond to the second line memory 1332 of FIG. 4. The line memory connected to the Output FIFO may be provided in a number corresponding to Uy, and a processing result of the processing core may be sequentially stored in a line memory connected to an output FIFO. Referring to FIG. 10, the result of (Uy) × (CH / Ux) unit is stored in a line memory, and CH pixels may be output per cycle. In one example, the second conversion unit may be configured to reorder the pixel data included in Uy line memories and sequentially output the pixel data in the form of 1*CH.

If Uy of the processing pixel unit of the Uy * Ux unit algorithm exceeds 1, the kernel matrix generator generates a kernel matrix for (Uy) x (CH / Ux) units during L / Uy cycles using M line memory, and the processing core may process the (Uy) x (CH / Ux) unit during every cycle. As shown in FIG. 10, Output FIFO stores the result in (Uy) x (CH / Ux) units in each line memory, and the stored pixel data is configured to output CH pieces of pixel data per cycle in raster scan order so that power fluctuations may be prevented through power spreading.

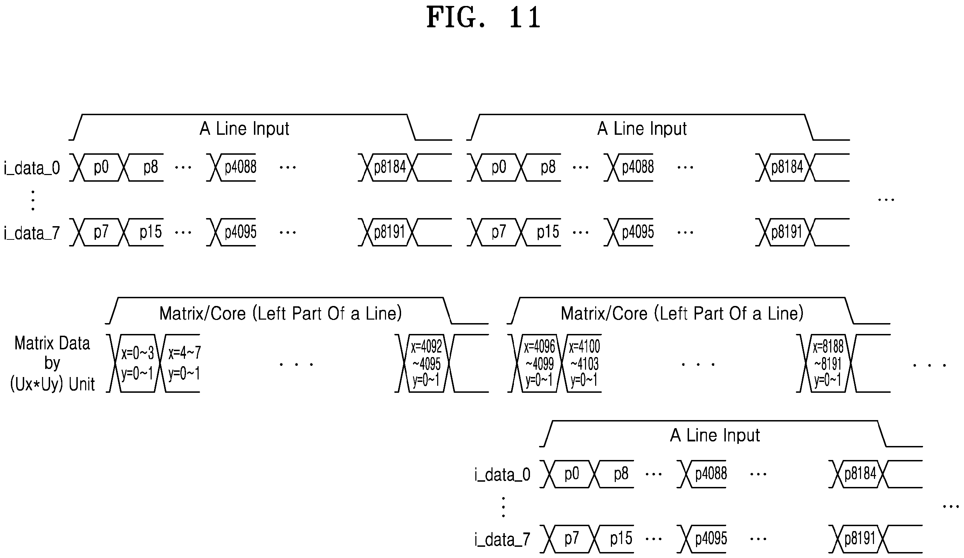

FIG. 11 is a diagram showing timing in an image processing processor according to an example embodiment. The timing diagram shown in FIG. 11 shows a processing timing diagram in the core logic in the case of CH of 8 and a width of 8192 in the processing pixel unit of Ux = 2 and Uy = 2. The timing diagram located at the top of FIG. 11 indicates the timing diagram for receiving pixel data from the first conversion unit. The timing diagram located in the middle of FIG. 11 is a timing diagram for performing image processing through processing units in the image processing circuit. The timing diagram located at the bottom of FIG. 11 represents a timing diagram in which pixel data is output from the second conversion unit.

Data may be sequentially input during one line input time A Line Input. Since it is 8 for CH, pixel data may be sequentially input in groups of 8.

i_data_0 may refer to the first line, and i_data_7 may refer to the eighth line. In the first line, pixel data of P0, P8, ..., P8184 may be input, and in the eighth line, pixel data of P7, P15, ..., P8191 may be input.

A process of processing the input pixel data in the core logic is described below. The pixel data may be processed in units of Uy * Ux. According to the embodiment(s) shown in FIG. 11, since Ux = 2, Uy = 2, and CH = 8, the processing unit is Uy * (CH / Ux), so it may be processed in units of 2x4. Therefore, referring to FIG. 11, it may be seen that processing is performed in units of 2x4 matrices of x=0 to 3 and y=0 to 1.

During the input time of one line A Line Input, the core block processes the left area of two lines, and processes the right area of two lines in the next line. Since both the left and right areas are processed only after two lines (Uy=2) pass, the output FIFO stores the processed areas in the line memory, reads the processed areas in raster scan order, and outputs the processed areas again.

According to the image processing processor, instead of processing both lines in 1h-time, only half of the lines in 1h-time may be processed so that logic gate count may be reduced.

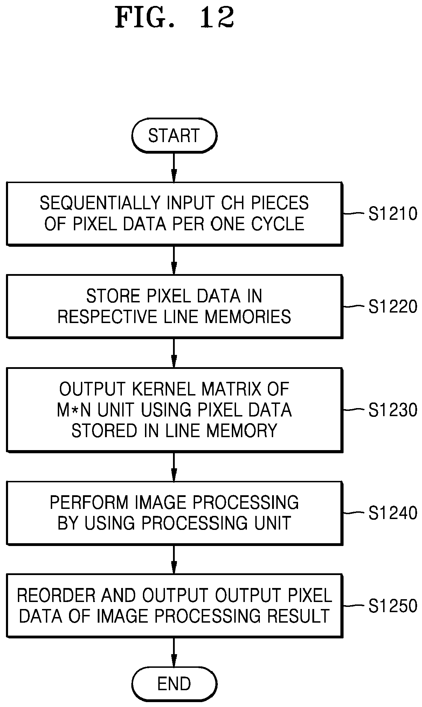

FIG. 12 is a flowchart showing an image processing method according to an example embodiment. Referring to FIG. 12, in operation S1210, CH pieces of pixel data may be sequentially inputted per one cycle. In operation S1220, CH pixels may be stored in the line memory for each line (store pixel data in respective line memories). In operation S1230, a kernel matrix in units of M*N may be output using the pixel data stored in the line memory. Through this, data throughput may be adjusted. In S1240, image processing may be performed using the processing unit. In this case, the processing unit may be determined through CH, which is the number of input pixel data, and processing pixel units Ux and Uy. In operation S1250, the pixel data output through the image processing may be reordered (reorder and output output pixel data of image processing result) to correspond to the pixel unit input in operation S1210.

The image processing method shown in FIG. 12 may be performed by the image processing processor described above. Deterioration of image quality due to power fluctuation may be prevented by equally consuming power for each line. In addition, ISP's core logic may use 1/2 of the logic size compared to the previous design method by using 1/2.

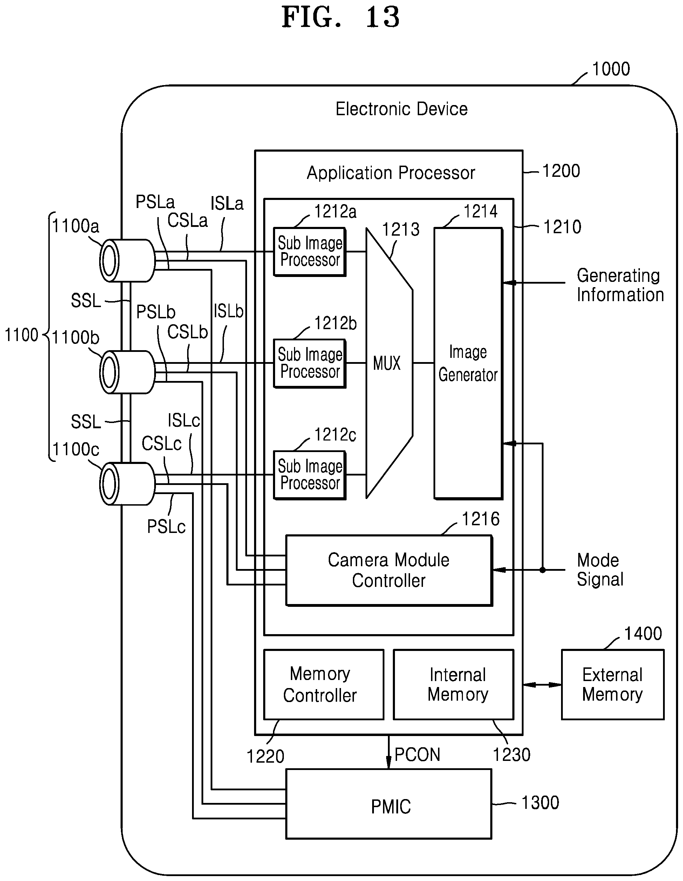

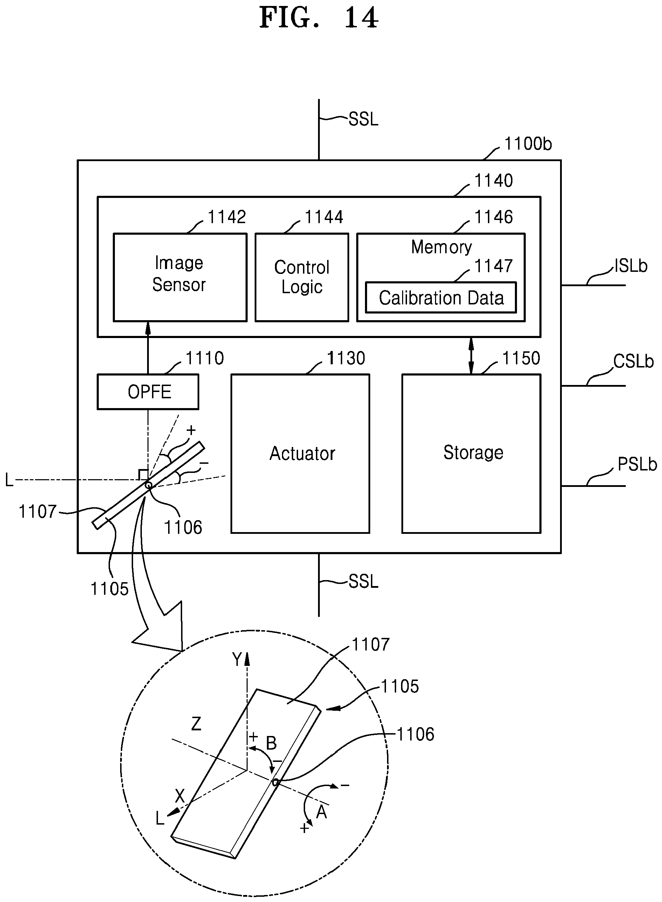

FIG. 13 is a block diagram showing an embodiment of an electronic device including a multi-camera module. FIG. 14 is a detailed block diagram showing an embodiment of the camera module shown in FIG. 13.

Referring to FIG. 13, an electronic device 1000 may include a camera module group 1100, an application processor 1200, a power management integrated circuit (PMIC) 1300, and an external memory 1400.

In an embodiment, the camera module group 1100 may include, e.g., a plurality of camera modules 1100a, 1100b, and 1100c. In some embodiments, the camera module group 1100 may include only two camera modules or may be modified to include n (n is a natural number of 4 or more) camera modules. In one example, the camera modules 1100a and 1100c may receive signals through a sync signal line SSL.

Hereinafter, a detailed configuration of the camera module 1100b will be described in more detail with reference to FIG. 14, but the following description may be equally applied to the other camera modules 1100a and 1100c in these embodiments or other cameras in other embodiments.

Referring to FIG. 14, the camera module 1100b may include a prism 1105, an optical path folding element (OPFE) 1110, an actuator 1130, an image sensing device 1140, and a storage 1150.

The prism 1105 may include a reflective surface 1107 of a light reflective material to change a path of light L incident from the outside.

In some embodiments, the prism 1105 may change the path of light L incident in a first direction X to a second direction Y perpendicular to the first direction X. In addition, the prism 1105 may rotate the reflective surface 1107 of the light reflecting material in an A direction around the central axis 1106, or rotate the central axis 1106 in a direction B to change the path of the light L incident in the first direction X to the second direction Y, which is perpendicular to the first direction X. At this time, the OPFE 1110 may also move in a third direction Z perpendicular to the first direction X and the second direction Y.

In some embodiments, the maximum angle of rotation of the prism 1105 in the A direction may be less than 15 degrees in the plus A direction, and in some embodiments, the maximum angle of rotation of the prism 1105 may be greater than 15 degrees in the minus A direction.

In some embodiments, the prism 1105 may move around 20 degrees in the plus or minus B direction, or between about 10 degrees and about 20 degrees, or between about 15 degrees and about 20 degrees, and here, the moving angle may move at the same angle in the plus or minus B direction, or may move to an almost similar angle within a range of 1 degree.

In some embodiments, the prism 1105 may move the reflective surface 1106 of the light reflecting material in a third direction (e.g., the Z direction) parallel to the extension direction of the central axis 1106.

In some embodiments, the camera module 1100b may have two or more prisms, and through this, the path of the light L incident in the first direction X may be variously changed, such as in a second direction Y perpendicular to the first direction X, then in the first direction X or in the third direction Z and again in the second direction Y.

The OPFE 1110 may include, e.g., optical lenses consisting of m groups (where m is a natural number). The m optical lens(es) may move in the second direction Y to change the optical zoom ratio of the camera module 1 100b. In an implementation, if the basic optical zoom ratio of the camera module 1 100b is Z, as m optical lens(es) included in the OPFE 1110 is/are moved, the optical zoom ratio of the camera module 1100b may be increased to 3Z or 5Z , or greater than 5Z.

The actuator 1130 may move the OPFE 1110 or an optical lens to a certain position. In an implementation, the actuator 1130 may adjust the position of the optical lens so that the image sensor 1142 is positioned at the focal length of the optical lens for accurate sensing.

The image sensing device 1140 may include an image sensor 1142, a control logic 1144 and a memory 1146. The image sensor 1142 may sense an image of a sensing target using light L provided through an optical lens. The control logic 1144 may control the overall operation of the camera module 1100b and may process the sensed image. In an implementation, the control logic 1144 may control the operation of the camera module 1100b according to a control signal provided through the control signal line CSLb (shown in FIG. 13), and extract image data (e.g., a person's face, arms, or legs) corresponding to a certain image from the sensed image. The camera module 1100b may be connected to the PMIC 1300 via a power signal line PSLb. Image data from the camera module 1100b may be provided to the sub image processor 1212b through the image signal line ISLb.

In some embodiments, the control logic 1144 may perform image processing such as encoding and noise reduction of the sensed image.

Referring to FIG. 14, the memory 1146 may store information required for operation of the camera module 1100b, such as calibration data 1147. The calibration data 1147 is information necessary for the camera module 1100b to generate image data using light L provided from the outside and, e.g., may include information about a degree of rotation, a focal length, and/or an optical axis. If the camera module 1100b is implemented in the form of a multi-state camera in which the focal length changes according to the position of the optical lens, the calibration data 1147 may include a focal length value for each position (or state) of the optical lens and information related to auto focusing.

The storage 1150 may store image data sensed through the image sensor 1142. The storage 1150 may be separate and outside the image sensing device 1140 and may be implemented in a stacked form with a sensor chip constituting the image sensing device 1140. In some embodiments, the image sensor 1142 may be composed of a first chip, and the control logic 1144, the storage 1150, and the memory 1146 may be composed of a second chip, and these two chips may be implemented in a stacked form.

In some embodiments, the storage 1150 may be implemented as Electrically Erasable Programmable Read-Only Memory (EEPROM). In some embodiments, the image sensor 1142 is composed of a pixel array, and the control logic 1144 may include an analog to digital converter and an image signal processor for processing the sensed image.

Referring to FIGS. 13 and 14 together, in some embodiments, each of the plurality of camera modules 1100a, 1100b, and 1100c may include an actuator 1130. Accordingly, each of the plurality of camera modules 1100a, 1100b, and 1100c may include the same or different calibration data 1147 according to the operation of the respective actuator 1130 included therein.

In some embodiments, one (e.g., 1100b) of the plurality of camera modules 1100a, 1100b, and 1100c is a camera module in the form of a folded lens including the prism 1105 and the OPFE 1110 described above, and the remaining camera modules (e.g., 1100a and 1100c) may be vertical camera modules that do not include the prism 1105 and the OPFE 1110.

In some embodiments, one camera module (e.g., 1100c) of the plurality of camera modules 1100a, 1100b, and 1100c, e.g., may be a vertical type depth camera that extracts depth information using infrared (IR) light. In this case, the application processor 1200 merges image data provided from the depth camera with image data provided from another camera module (e.g., 1100a or 1100b) to generate a 3D depth image. In one example, the PMIC 1300 may generate power corresponding to each of the camera modules 1 100a, 1 100b, and 1 100c and adjust the level of the power, in response to a power control signal PCON from the application processor 1200.

In some embodiments, at least two camera modules (e.g., 1100a and 1100b) among the plurality of camera modules 1100a, 1100b, and 1100c may have different fields of view. In such embodiments, the optical lenses of the at least two camera modules (e.g., 1100a and 1100b) among the plurality of camera modules 1100a, 1100b, and 1100c may be different from each other.

Also, in some embodiments, the fields of view of each of the plurality of camera modules 1100a, 1100b, and 1100c may be different from each other. In an implementation, the camera module 1100a may be an ultrawide angle camera, the camera module 1100b may be a standard wide angle camera, and the camera module 1100c may be a tele camera capable of zoom function. In this case, optical lenses included in each of the plurality of camera modules 1100a, 1100b, and 11 00c may also be respectively different from each other.

In some embodiments, each of the plurality of camera modules 1100a, 1100b, and 1100c may be physically separated from each other. In an implementation, the sensing area of one image sensor 1142 is not divided and used by a plurality of camera modules 1100a, 1100b, and 1100c, but an independent image sensor 1142 may be inside each of the plurality of camera modules 1100a, 1100b, and 1100c.

Referring to FIG. 13, the application processor 1200 may include an image processing device 1210, a memory controller 1220, and an internal memory 1230. The application processor 1200 may be implemented separately from the plurality of camera modules 1100a, 1100b, and 1100c, e.g., as a separate semiconductor chip.

The image processing device 1210 may include a plurality of sub image processors 1212a, 1212b, and 1212c, an image generator 1214, and a camera module controller 1216.

The image processing device 1210 may include a plurality of sub image processors 1212a, 1212b, and 1212c corresponding to the number of the plurality of camera modules 1100a, 1100b, and 1100c, respectively.

The image data generated from the camera module 1100a may be provided to the sub image processor 1212a through the image signal line ISLa, image data generated from the camera module 1100b may be provided to the sub image processor 1212b through the image signal line ISLb, and image data generated by the camera module 1100c may be provided to the sub image processor 1212c through the image signal line ISLc. Such image data transmission may be performed using, e.g., a Camera Serial Interface (CSI) based on Mobile Industry Processor Interface (MIPI).

Meanwhile, in some embodiments, one sub image processor may be arranged to correspond to and connected with a plurality of camera modules. In an example implementation, the sub image processor 1212a and the sub image processor 1212c may not be implemented separately from each other as shown, but instead integrated into one sub image processor, and image data provided from the camera modules 1100a and 1100c may be selected through a selection element (e.g., a multiplexer, not shown) and then provided to the integrated sub image processor. In such an implementation, the sub image processor 1212b may not integrated and may receive image data from the camera module 1100b.

As noted, in some embodiments, the image data generated from the camera module 1100a may be provided to the sub image processor 1212a through the image signal line ISLa, image data generated from the camera module 1100b may be provided to the sub image processor 1212b through the image signal line ISLb, and image data generated by the camera module 1100c may be provided to the sub image processor 1212c through the image signal line ISLc. And, the image data processed by the sub image processor 1212b may be directly provided to the image generator 1214, but any one of the image data processed by the sub image processor 1212a and the image data processed by the sub image processor 1212c may be selected through a selection element (e.g., a multiplexer 1213), and then may be provided to the image generator 1214.

Each of the sub image processors 1212a, 1212b, and 1212c may perform image processing, such as bad pixel correction, 3A adjustment (Auto-focus correction, Autowhite balance, Auto-exposure), noise reduction, sharpening, gamma control and/or remosaic, on image data provided from the camera modules 1100a, 1100b, and 1100c.

In some embodiments, remosaic signal processing may be performed in each of the camera modules 1100a, 1100b, and 1100c and then provided to the sub image processors 1212a, 1212b, and 1212c, respectively.

Image data processed by each of the sub image processors 1212a, 1212b, and 1212c may be provided to the image generator 1214. The image generator 1214 may generate an output image using image data provided from each of the sub image processors 1212a, 1212b, and 1212c according to image generating information or a mode signal.

In an implementation, the image generator 1214 may generate an output image by merging at least some of the image data generated by the image processors 1212a, 1212b, and 1212c according to image generation information or a mode signal. Also, the image generator 1214 may generate an output image by selecting one of image data generated by the image processors 1212a, 1212b, and 1212c according to image generation information or a mode signal.

In some embodiments, the image creation information may include a zoom signal or zoom factor. Also, in some embodiments, the mode signal may be a signal based on a mode selected by a user.

If the image generation information is a zoom signal (zoom factor) and each of the camera modules 1100a, 1100b, and 1100c has different fields of view (viewing angles), the image generator 1214 may perform different operations according to the type of zoom signal. In an implementation, if the zoom signal is the first signal, among the image data output from the sub image processor 1212a and the image data output from the sub image processor 1212c, an output image may be generated using image data output from the sub image processor 1212a and image data output from the sub image processor 1212b. If the zoom signal is a second signal different from the first signal, among the image data output from the sub image processor 1212a and the image data output from the sub image processor 1212c, the image generator 1214 may generate an output image using image data output from the sub image processor 1212c and image data output from the sub image processor 1212b. If the zoom signal is a third signal different from the first and second signals, the image generator 1214 may generate an output image by selecting any one of image data output from each of the sub image processors 1212a, 1212b, and 1212c without merging the image data. A method of processing image data may be modified and implemented as needed.

By way of summation and review, the CMOS image sensor may be abbreviated as CMOS image sensor (CIS). CIS may include a plurality of pixels that are twodimensionally arranged. Each of the pixels may include, e.g., a photodiode (PD). The PD may serve to convert incident light into an electrical signal.

Recently, with the development of computer and communication industries, demand for image sensors with improved performance has increased in various fields, including fields such as digital cameras, camcorders, smart phones, game devices, security cameras, medical micro-cameras, robotics, vehicles, as well applications in the field of security and monitoring. An image processing processor capable of reducing power fluctuation is disclosed.

Embodiments are set out in the following clauses:

1. An image processor, comprising: a first conversion unit sequentially scanning input pixel data, storing the pixel data for each line, and outputting an M*N kernel matrix through the stored pixel data, M and N being integers greater than or equal to 2; an image processing circuit image-processing pixel data corresponding to the M*N kernel matrix on a processing unit basis; and a second conversion unit reordering a result of the image-processing by the image processing circuit to correspond to a format of pixel data input to the first conversion unit and outputting the reordered result.

2. The image processor of clause 1, wherein the first conversion unit includes M line memories corresponding to a number of rows of the kernel matrix.

3. The image processor of clause 1 or 2, wherein: the first conversion unit simultaneously receives CH pieces of pixel data per cycle, and CH satisfies $2^n$, and n is an integer greater than or equal to 1.

4. The image processor of clause 1, 2 or 3, wherein the image processing circuit performs image processing by an area corresponding to half of the line per 1h-time.

5. The image processor of any one of clauses 1-4, wherein the second conversion unit includes a number of line memories corresponding to a row direction of the processing unit.

6. The image processor of clause 3, 4 or 5, wherein the second conversion unit simultaneously outputs the CH pieces of pixel data per cycle.

7. An image processing device, comprising: an image sensor including a plurality of pixels and a color filter array on the plurality of pixels; and an image processor processing data output from the image sensor, wherein the image processor includes: a first conversion unit sequentially scanning input pixel data, storing the pixel data for each line, and outputting an M*N kernel matrix through the stored pixel data, wherein M and N are integers greater than or equal to 2; an image processing circuit image-processing pixel data corresponding to the M*N kernel matrix on a processing unit basis; and a second conversion unit reordering a result of the image-processing of the image processing circuit to correspond to a format of pixel data input to the first conversion unit and outputting the reordered result.

8. An image processing device of clause 7, wherein: the color filter array includes pixels provided in units of Uy*Ux in each color unit, and Ux is an integer greater than or equal to 1, and Uy is an integer greater than or equal to 2.

9. The image processing device of clause 8, wherein: the first conversion unit simultaneously receives the input pixel data in the form of 1*CH, and CH satisfies $2^n$, and n is an integer greater than or equal to 1.

10. The image processing device of clause 9, wherein the first conversion unit: includes M line memories corresponding to a number of rows of the kernel matrix, and stores the input pixel data for each line in the M line memories.

11. The image processing device of clause 9 or 10, wherein the processing unit is Uy * (CH / Ux).

12. The image processing device of clause 9, 10 or 11, wherein the second conversion unit includes Uy line memories.

13. The image processing device of clause 12, wherein the second conversion unit: reorders the pixel data included in the Uy line memories, and sequentially outputs the pixel data in the form of 1 * CH.

14. An image processing method, comprising: sequentially receiving, per cycle, CH pieces of pixel data output from an image sensor, and storing the pixel data in first to Mth line memories for each line; outputting the pixel data stored in the first line memory to the Mth line memory, in the form of an M*N kernel matrix; setting a processing unit, and image-processing pixel data corresponding to the M*N kernel matrix using the processing unit; and reordering the image-processed data, wherein CH satisfies $2^n$, n is an integer greater than or equal to 1, and M and N are integers greater than or equal to 2. 15. The image processing method of clause 14, wherein the processing unit is determined by a unit of pixels included in each one color unit of a color filter array of the image sensor.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An image processor, comprising:

   a first conversion unit configured to sequentially scan input pixel data, store the pixel data for each line, and output an M*N kernel matrix through the stored pixel data, M and N being integers greater than or equal to 2;
   an image processing circuit configured to image-process pixel data corresponding to the M*N kernel matrix on a processing unit basis; and
   a second conversion unit configured to reorder a result of the image processing by the image processing circuit to correspond to a format of pixel data input to the first conversion unit and to output the reordered result.

2. The image processor as claimed in claim 1, wherein the first conversion unit includes M line memories corresponding to a number of rows of the kernel matrix.

3. The image processor as claimed in claim 1 or 2, wherein:

   the first conversion unit is configured to simultaneously receive CH pieces of pixel data per cycle, and
   CH satisfies $2^n$, and n is an integer greater than or equal to 1.

4. The image processor as claimed in any preceding claim, wherein the image processing circuit is configured to perform image processing by an area corresponding to half of the line per 1h-time.

5. The image processor as claimed in any preceding claim, wherein the second conversion unit includes a number of line memories corresponding to a row direction of the processing unit.

6. The image processor as claimed in any one of claims 3, 4 or 5, wherein the second conversion unit is configured to simultaneously output the CH pieces of pixel data per cycle.

7. An image processing device, comprising:

an image sensor including a plurality of pixels and a color filter array on the plurality of pixels; and
the image processor of claims 1 to 6, configured to process data output from the image sensor.

8. An image processing device as claimed in claim 7, wherein:

the color filter array includes pixels provided in units of Uy*Ux in each color unit, and
Ux is an integer greater than or equal to 1, and
Uy is an integer greater than or equal to 2.

9. The image processing device as claimed in claim 8, wherein:

the first conversion unit is configured to simultaneously receive the input pixel data in the form of 1*CH, and
CH satisfies $2^n$, and n is an integer greater than or equal to 1.

10. The image processing device as claimed in claim 9, wherein the first conversion unit:

includes M line memories corresponding to a number of rows of the kernel matrix, and
is configured to store the input pixel data for each line in the M line memories.

11. The image processing device as claimed in claim 9 or 10, wherein the processing unit is Uy * (CH / Ux).

12. The image processing device as claimed in claim 9, 10 or 11, wherein the second conversion unit includes Uy line memories.

13. The image processing device as claimed in claim 12, wherein the second conversion unit is configured to:

reorder the pixel data included in the Uy line memories, and

sequentially output the pixel data in the form of 1*CH.

14. An image processing method, comprising:

sequentially receiving, per cycle, CH pieces of pixel data output from an image sensor, and storing the pixel data in first to Mth line memories for each line;
outputting the pixel data stored in the first line memory to the Mth line memory, in the form of an M*N kernel matrix;
setting a processing unit, and image-processing pixel data corresponding to the M*N kernel matrix using the processing unit; and
reordering the image-processed data, wherein CH satisfies $2^n$, n is an integer greater than or equal to 1, and M and N are integers greater than or equal to 2.

15. The image processing method as claimed in claim 14, wherein the processing unit is determined by a unit of pixels included in each one color unit of a color filter array of the image sensor.

# FIG. 1

LS

Object

100

Pixel Array — 110

Readout Circuit — 120

IDT1 / 130

/ 131
FIRST CONVERSION UNIT

IDT1' / 132
IMAGE PROCESSING CIRCUIT

IDT1'' / 133
SECOND CONVERSION UNIT

IDT2 / 200

Processor

# FIG. 2

# FIG. 3A

PX_Array

| | | | |
|---|---|---|---|
| SP12 | SP13 | SP14 | SP15 |
| SP8 | SP9 | SP10 | SP11 |
| SP4 | SP5 | SP6 | SP7 |
| SP0 | SP1 | SP2 | SP3 |

:G

:R

:B

# FIG. 3B

3x3 sub-pixel

SP4

SP5

SP0

SP1

:G

:R

:B

# FIG. 3C

4x4 sub-pixel

SP4 — [ ] — SP5

SP0 — [ ] — SP1

[ ] :G

[ ] :R

[ ] :B

# FIG. 4

FIG. 5

# FIG. 6

(1)

Left Frame

# FIG. 7

Low Address

| | |
|---|---|
| P0 | |
| P1 | |
| P2 | A0 |
| P3 | |

| | |
|---|---|
| P320 | |
| P321 | |
| P322 | A1 |
| | |

| | |
|---|---|
| P640 | |
| P641 | |
| P642 | A2 |
| | |

High Address

Memory Cell (STANDARD STORAGE METHOD)

| P0 | P1 | P2 | P3 | P4 | P5 | P6 | · · · |
|------|------|------|------|------|------|------|---|
| P320 | P321 | P322 | P323 | P324 | P325 | P326 | · · · |
| P620 | P621 | P622 | P623 | P624 | P625 | P626 | · · · |

FIG. 8A

# FIG. 8B

# FIG. 9A

# FIG. 9B

# FIG. 10

CH (#of pixels per a cycle)
(CH/Ux)% Ux = 0,

Kernel Matrix Gen.
M*N Matrix
Per (Uy) * (Ux) Pixels

Line Memory
M

| LINE MEM 1 |
| LINE MEM 2 |
| LINE MEM 3 |
| ⋮ |
| LINE MEM M |

N pixels

N pixels

Ux  Uy

M pixels

CH/2

Processing Core
(Uy) * (CH/Ux) Units
Per a Cycle

Output FIFO
Raster scan Reordering

Line Memory
Uy

| LINE MEM 1 |
| ⋮ |
| LINE MEM Uy |

EP 4 418 197 A1

# FIG. 11

A Line Input

i_data_0  | p0 | p8 | ⋯ | p4088 | ⋯ | p8184 |

i_data_7  | p7 | p15 | ⋯ | p4095 | ⋯ | p8191 |

A Line Input

i_data_0  | p0 | p8 | ⋯ | p4088 | ⋯ | p8184 |

i_data_7  | p7 | p15 | ⋯ | p4095 | ⋯ | p8191 |

Matrix/Core (Left Part Of a Line)

Matrix Data by (Ux*Uy) Unit

| x=0~3 y=0~1 | x=4~7 y=0~1 | ⋯ | x=4092 ~4095 y=0~1 |

Matrix/Core (Left Part Of a Line)

| x=4096 ~4099 y=0~1 | x=4100 ~4103 y=0~1 | ⋯ | x=8188 ~8191 y=0~1 |

A Line Input

i_data_0  | p0 | p8 | ⋯ | p4088 | ⋯ | p8184 |

i_data_7  | p7 | p15 | ⋯ | p4095 | ⋯ | p8191 |

EP 4 418 197 A1

# FIG. 12

START

↓

SEQUENTIALLY INPUT CH PIECES
OF PIXEL DATA PER ONE CYCLE — S1210

↓

STORE PIXEL DATA IN
RESPECTIVE LINE MEMORIES — S1220

↓

OUTPUT KERNEL MATRIX OF
M*N UNIT USING PIXEL DATA
STORED IN LINE MEMORY — S1230

↓

PERFORM IMAGE PROCESSING
BY USING PROCESSING UNIT — S1240

↓

REORDER AND OUTPUT OUTPUT PIXEL
DATA OF IMAGE PROCESSING RESULT — S1250

↓

END

# FIG. 13

# FIG. 14

Europäisches
Patentamt

European
Patent Office

Office européen
des brevets

## EUROPEAN SEARCH REPORT

Application Number

EP 24 15 8415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 477 582 A1 (IMAGINATION TECH LTD [GB]) 1 May 2019 (2019-05-01) | 1-7,14, 15 | INV. G06T1/20 |
| Y | * abstract *<br>* paragraph [0004] *<br>* figure 1b *<br>* paragraph [0048] *<br>* paragraph [0080] *<br>----- | 8-13 | G06T1/60 |
| Y | US 2022/005168 A1 (KIM IRINA [KR] ET AL) 6 January 2022 (2022-01-06) | 8-13 | |
| A | * abstract *<br>* figures 4A,4B *<br>----- | 1-7,14, 15 | |
| A | US 2007/098081 A1 (VAJHALLYA MANOJ [IN] ET AL) 3 May 2007 (2007-05-03)<br>* abstract *<br>----- | 1-15 | |

TECHNICAL FIELDS
SEARCHED (IPC)

G06T

The present search report has been drawn up for all claims

| Place of search | Date of completion of the search | Examiner |
|---|---|---|
| Munich | 10 July 2024 | Millet, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 8415

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | | Publication date | Patent family member(s) | | Publication date |
|---|---|---|---|---|---|
| EP 3477582 | A1 | 01-05-2019 | CN | 109726732 A | 07-05-2019 |
| | | | EP | 3477582 A1 | 01-05-2019 |
| | | | GB | 2567882 A | 01-05-2019 |
| | | | US | 2019130210 A1 | 02-05-2019 |
| US 2022005168 | A1 | 06-01-2022 | CN | 113891051 A | 04-01-2022 |
| | | | KR | 20220004436 A | 11-01-2022 |
| | | | TW | 202211686 A | 16-03-2022 |
| | | | US | 2022005168 A1 | 06-01-2022 |
| | | | US | 2023377111 A1 | 23-11-2023 |
| US 2007098081 | A1 | 03-05-2007 | US | 2007098081 A1 | 03-05-2007 |
| | | | US | 2011310971 A1 | 22-12-2011 |

EPO FORM P0459

For more details about this annex : see Official Journal of the European Patent Office, No. 12/82